# FASCICULE DE BREVET EUROPEEN

(11) **EP 1 209 575 B1**
(45) Date de publication et mention de la délivrance du brevet: **10.10.2007**
(21) Numéro de dépôt: 01402879.9
(22) Date de dépôt: 09.11.2001
(51) Int. Cl.: G06F 13/40

(54) **Dispositif de pilotage automatique de la tension appliquée au conducteur de données d'une liaison série**
Steuervorrichtung zur automatischen Steuerung von an einer Datenleitung angelegten Spannung in einer Serienverbindung
Automatic arrangement for controlling the voltage applied to a data conductor in a serial connection

(30) Priorité: 17.11.2000 FR 0014869
(43) Date de publication de la demande: 29.05.2002
(73) Titulaire: STMicroelectronics S.A., 92120 Montrouge (FR)
(72) Inventeur: Mariaud, Xavier, c/o Cabinet Ballot, 75116 Paris (FR); Klingelschmidt, Daniel, c/o Cabinet Ballot, 75116 Paris (FR)
(74) Mandataire: Ballot, Paul Denis Jacques

(56) Documents cités:
- EP-A- 0 952 530
- WO-A-00/67137
- PATENT ABSTRACTS OF JAPAN vol. 2000, no. 11, 3 janvier 2001 (2001-01-03) & JP 2000 224450 A (SANYO ELECTRIC CO LTD), 11 août 2000 (2000-08-11)
- PATENT ABSTRACTS OF JAPAN vol. 2000, no. 14, 5 mars 2001 (2001-03-05) & JP 2000 305676 A (FUJI PHOTO FILM CO LTD), 2 novembre 2000 (2000-11-02)

## Description

L'invention concerne les liaisons série par câbles entre des appareils électroniques et, plus particulièrement, les liaisons série connues sous l'acronyme USB pour l'expression anglo-saxonne "Universal Serial Bus" dans lesquelles l'un des quatre conducteurs du câble est connecté à une source de tension en vue d'alimenter l'appareil auquel le câble est connecté.

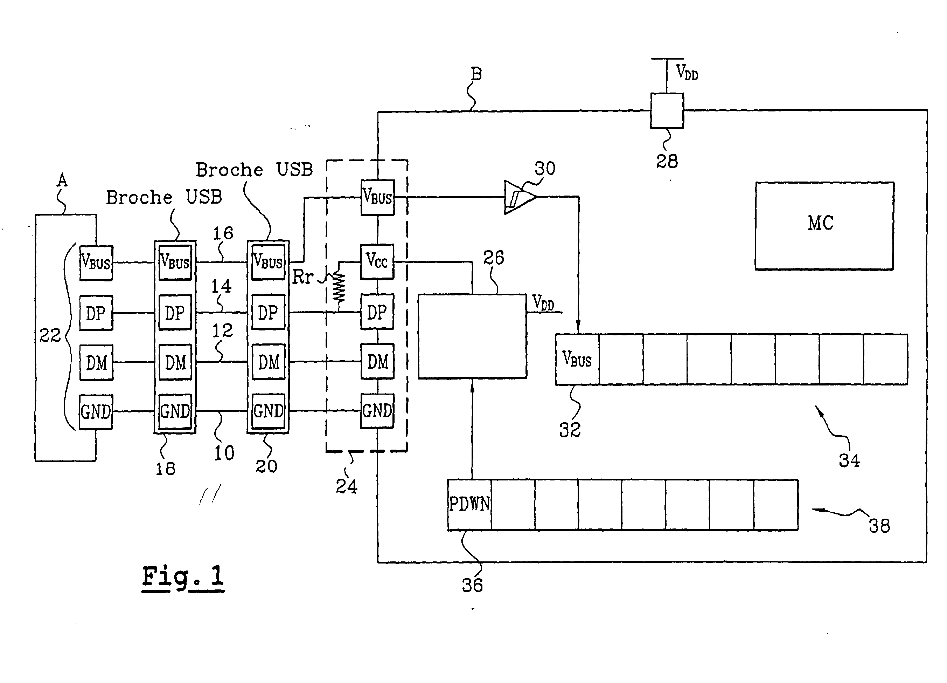

Une liaison série de type USB pour connecter (figure 1) deux appareils électroniques A et B comprend quatre fils conducteurs 10, 12, 14 et 16 qui sont affectés comme suit :
- le premier 10 à la connexion de masse,
- le deuxième 12 et le troisième 14 à une ligne de données appelée respectivement l'une 12 DM (ou D-) et l'autre 14 DP (ou D+), et
- la quatrième 16 à une tension d'alimentation de cinq volts (5V) appelée V_{BUS}.

Ces fils conducteurs 10, 12, 14 et 16 sont connectés à chaque extrémité à une broche de connexions 18 et 20 de type mâle par exemple qui coopère avec une broche de connexions 22 et 24 de type femelle portée l'une par l'appareil A et l'autre par l'appareil B.

Ainsi, grâce au fil conducteur 16, l'appareil A alimente l'appareil B avec la tension V_{BUS}.

Dans l'appareil B, il est prévu une résistance Rr, dite de rappel (ou "pull-up" en langage anglo-saxon) qui connecte le conducteur DP ou DM au conducteur d'alimentation. La valeur de cette résistance Rr détermine la vitesse de communication de l'appareil B, soit une vitesse élevée si elle est connectée à DP, soit une vitesse basse si elle est connectée à DM.

L'appareil B comprend une source d'alimentation interne représentée par le rectangle 26 symbolisant un régulateur de tension et fournissant une tension régulée V_{CC} de 3,3 volts ; la borne de sortie de cette source 26 est connectée à la résistance de rappel Rr. Cette source d'alimentation 26 est dérivée soit de la tension V_{BUS}, soit d'une tension externe V_{DD} sur une borne d'entrée 28.

Les spécifications du bus USB imposent que la source d'alimentation 26 de la résistance de rappel Rr doit être dérivée ou commandée par l'alimentation V_{BUS} de telle sorte que quand la tension V_{BUS} n'est pas présente, la résistance de rappel ne fournit pas de courant sur le conducteur de données DP ou DM auquel elle est connectée. Ceci s'applique uniquement aux appareils B alimentés par V_{DD}, c'est-à-dire ceux qui ne sont pas alimentés par V_{BUS}.

Cette spécification résulte du fait que l'absence de V_{BUS} signifie que l'appareil A n'est pas en état de fonctionner (par exemple à l'arrêt) et, dans cet état, le régulateur de tension 26 fournirait un courant à l'appareil A, ce qui risquerait d'endommager ce dernier.

Il en résulte que l'appareil B doit détecter la présence ou l'absence de V_{BUS} de manière à alimenter la résistance de rappel Rr uniquement dans le cas où V_{BUS} est présent.

Actuellement, cette détection de V_{BUS} est réalisée par un programme d'un microcontrôleur MC de l'appareil B.

A cet effet, la borne V_{BUS} est connectée à la borne d'entrée d'un dispositif électronique 30 du type "trigger de Schmitt" dont la borne de sortie commande l'état d'une bascule 32 d'un registre 34, à savoir l'état "1" pour V_{BUS} présent et état "0" pour V_{BUS} absent. Par ailleurs, la mise en marche ou l'arrêt du régulateur 26 est commandé par l'état d'une bascule 36 d'un registre de commande 38, à savoir l'état "1" pour le régulateur en arrêt et l'état "0" pour le régulateur en marche.

Le programme du microcontrôleur consiste donc à lire périodiquement l'état de la bascule d'état 32 et à positionner la bascule 36 à l'état "0" (régulateur 26 en marche) uniquement dans le cas où la bascule 32 est à l'état "1" (V_{BUS} présent).

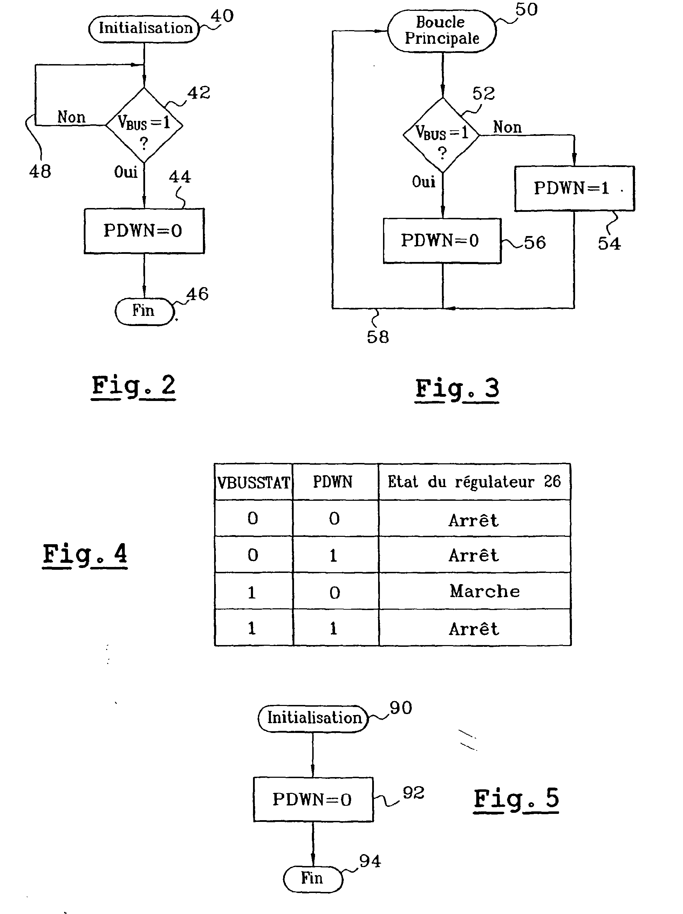

Lors de la mise en marche de l'appareil B, le régulateur 26 ne doit être mis en marche qu'en présence de V_{BUS}. Ceci est obtenu par une phase d'initialisation du microcontrôleur selon l'organigramme de la figure 2. A l'initialisation de l'appareil B représentée par l'opération 40, le microcontrôleur lit la bascule 32. Lors de l'opération suivante 42, il compare l'état de cette bascule à "1". En cas de réponse positive, il positionne la bascule 36 à l'état "0" (PDWN = 0) par l'opération 44, ce qui termine la phase d'initialisation par l'état de Fin 46. En cas de réponse négative, le microcontrôleur effectue une nouvelle boucle 48.

Cette initialisation étant effectuée, le programme 50 (figure 3) du microcontrôleur MC effectue périodiquement une vérification que la tension V_{BUS} est présente en lisant l'état de la bascule 32 et en le comparant par l'opération 52 à l'état "1" correspondant à la présence de V_{BUS}. En cas de réponse négative, la bascule 36 est mise à l'état "1" (PDWN = 1) par l'opération 54, ce qui arrête le régulateur 26. En cas de réponse positive, la bascule 36 est mise à l'état "0" par l'opération 56 (PDWN = 0), ce qui maintient le régulateur 26 en marche.

Les moyens qui viennent d'être décrits pour répondre aux impératifs des spécifications relatives au bus USB sont satisfaisants pour assurer le respect à ces spécifications mais "consomment" du temps de traitement du microcontrôleur car la vérification de l'état de la borne V_{BUS} doit être effectuée très souvent.

JP2000224450 décrit un dispositif de pilotage automatique de la tension appliqué à l'un des deux conducteurs d'un câble USB.

Un but de la présente invention est donc de réaliser une surveillance automatique de la borne d'entrée V_{BUS} en évitant l'intervention régulière et fréquente du programme du microcontrôleur.

L'invention concerne un dispositif de pilotage automatique de la tension appliquée V_{CC} à l'un des deux conducteurs DP, DM d'une liaison série de type USB dans un appareil périphérique B connecté en amont à un autre appareil A, ledit appareil périphérique B comportant une source de tension d'alimentation propre qui fournit ladite tension appliquée V_{CC} audit conducteur de données DP ou DM et étant susceptible de recevoir sur un autre conducteur une tension d'alimentation V_{BUS}, caractérisé en ce qu'il comprend :
- un circuit de détection de la présence ou de l'absence de ladite tension d'alimentation V_{BUS},
- un circuit de mémorisation de l'état de présence ou d'absence de ladite tension d'alimentation V_{BUS}, et
- un circuit logique de commande de la source d'alimentation produisant la tension Vcc pour mettre en marche ladite source d'alimentation uniquement en présence de ladite tension d'alimentation V_{BUS}.

D'autrès caractéristiques et avantages de la présente invention apparaîtront lors de la description d'un exemple particulier de réalisation, ladite description étant faite en relation avec les dessins joints dans lesquels :
- la figure 1 est un schéma d'une liaison par bus USB entre deux appareils électroniques A et B selon l'art antérieur,
- les figures 2 et 3 sont des organigrammes illustrant le fonctionnement du dispositif selon l'art antérieur,
- la figure 4 est une table de vérité logique,
- la figure 5 est un organigramme illustrant la phase d'initialisation du dispositif automatique selon l'invention,
- la figure 6 est un schéma électronique illustrant le dispositif automatique selon l'invention,
- la figure 7 est un schéma illustrant le circuit de détection de la présence ou de l'absence de la tension V_{BUS}, selon l'invention, et
- la figure 8 est un organigramme illustrant le fonctionnement de la machine d'états utilisée dans le circuit de détection de la présente ou de l'absence de V_{BUS}.

Dans les figures, les références identiques désignent des éléments identiques réalisant des fonctions identiques.

Les figures 1, 2 et 3, illustrant l'art antérieur, ont été décrites dans le préambule.

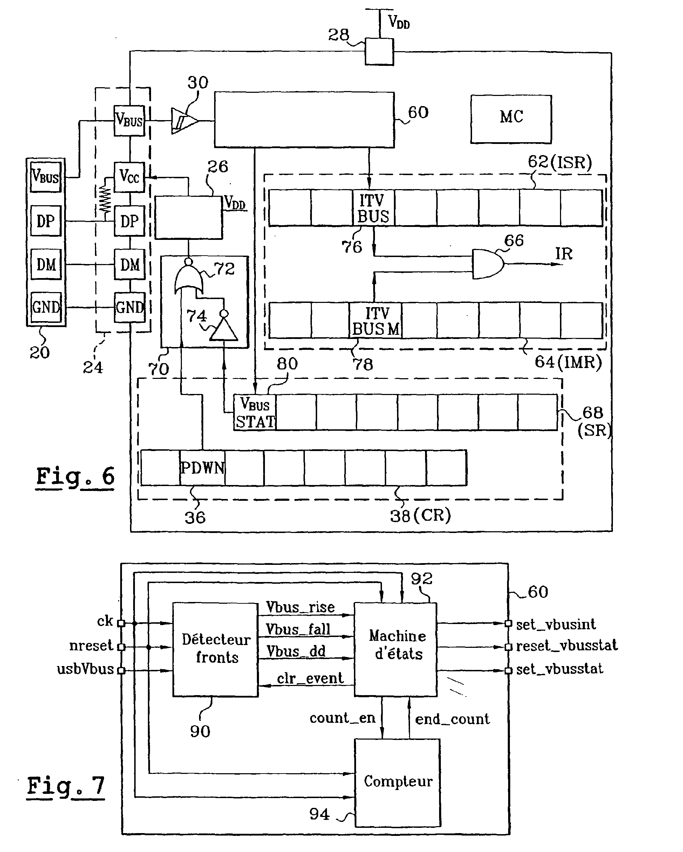

Le dispositif automatique de pilotage du régulateur 26 comprend (figure 6) les éléments suivants :
- un circuit de détection 60 de la présence ou de l'absence de la tension V_{BUS} sur la borne correspondante V_{BUS} de la broche 24,
- un circuit logique 70 de commande du régulateur 26,
- la bascule 36 du registre de contrôle 38 du microcontrôleur MC,
- une bascule 80 d'un registre d'états 68 du microcontrôleur MC,
- une bascule 76 d'un registre d'états d'interruption 62 du microcontrôleur MC,
- une bascule 78 d'un registre de masques d'interruption 64 (IMR) du microcontrôleur MC, et
- un circuit logique ET 66.

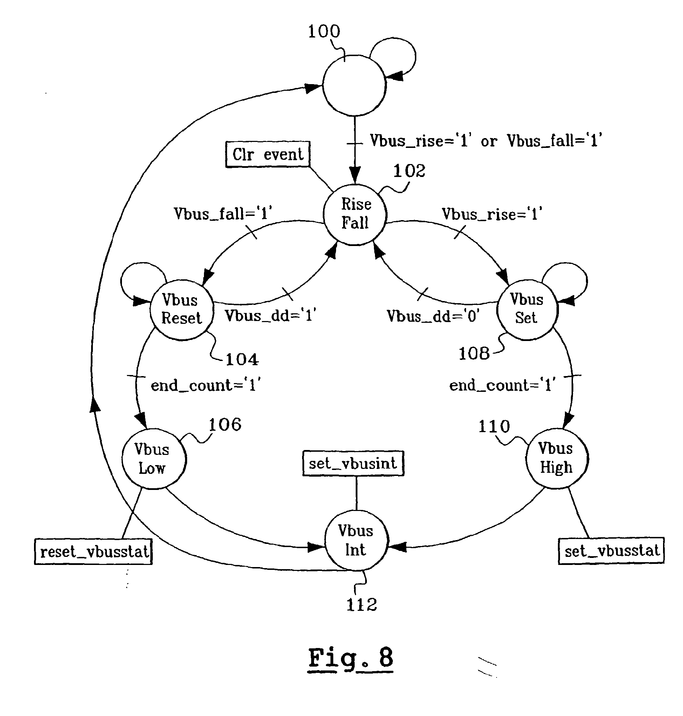

Le circuit de détection 60, qui sera décrit plus en détails ci-après en relation avec les figures 7 et 8, fournit un premier signal "set-vbusstat" de mise à l'état "1" de la bascule 80 lorsqu'il détecte un flanc montant du signal V_{BUS} et un deuxième signal "reset-vbusstat" de mise à l'état "0" de la bascule 80 lorsqu'il détecte un flanc descendant du signal V_{BUS}, le flanc montant et le flanc descendant étant ceux du signal fourni par le circuit 30.

Le circuit de détection 60 fournit un troisième signal "set-vbusint" qui met à l'état "1" la bascule 76 (ITVBUS) du registre d'états d'interruption 62 (ISR).

Le circuit logique 70 comprend un circuit inverseur 74 dont la borne d'entrée est connectée à la borne de sortie de la bascule 80 du registre 68 (SR). Il comprend également un circuit OU inverseur 72 dont une des deux bornes d'entrée est connectée à la borne de sortie du circuit inverseur 74 et dont l'autre borne d'entrée est connectée à la borne de sortie de la bascule 36 (PDWN) du registre de contrôle 38 (CR). La bascule 36 est mise à l'état "0" (PDWN = 0) lors de la phase d'initialisation (figure 5) du microcontrôleur MC, ce qui signifie que le régulateur 26 peut être mis en marche. Cette phase d'initialisation (figure 5) comprend l'opération de démarrage 90, l'opération 92 de mise à l'état "0" et l'opération de fin 94.

Contrairement au dispositif de l'art antérieur, il n'y a pas de boucle 48 (figure 2).

La bascule 78 est mise à l'état "1" ou "0" par le microcontrôleur MC pour indiquer s'il souhaite ou non connaître l'état de la bascule 76.

Le circuit de détection 60 comprend (figure 7) :
- un circuit de détection 90 du flanc montant et du flanc descendant du signal fourni par le dispositif électronique du type "trigger de Schmitt" 30,
- une machine d'états 92, et
- un compteur 94.

Ces différents éléments 90, 92 et 94 reçoivent du microcontrôleur MC un signal d'horloge "ck" et un signal de remise à zéro "nreset" de manière à réaliser la synchronisation.

Le circuit de détection 90 reçoit, en outre, le signal usbV_{bus} via le circuit 30. Il fournit à la machine d'états 92 les trois signaux suivants :
- Vbus-rise correspondant à la détection d'un flanc montant,
- Vbus-fall correspondant à la détection d'un flanc descendant,
- Vbus-dd correspondant à la détection d'un flanc montant ou d'un flanc descendant.

Il reçoit de la machine d'états 92 un signal clr-event qui indique que le signal Vbus-rise ou Vbus-fall a été pris en compte et peut être remis à zéro.

Le circuit de détection 92 fournit les trois signaux définis ci-dessus : set-Vbusint, reset-vbusstat et set-vbusstat.

Le compteur 94 mesure la durée qui s'écoule après la détection du flanc montant ou du flanc descendant à compter de l'apparition d'un signal "count-en" correspondant à un changement d'état de la borne V_{BUS}. Lorsque le compteur a atteint une certaine valeur prédéterminée, cela signifie que le changement d'état est stable et qu'il peut être pris en compte par la machine d'états 92 qui reçoit alors le signal end-count.

La machine d'états 92 fonctionne conformément à l'organigramme de la figure 8. L'état 100 correspond à un état d'attente de la machine. Dès que le circuit de détection 90 fournit un signal Vbus-rise = 1 ou Vbus-fall = 1, la machine d'états passe à un état 102 de remise à l'état "0" des différents circuits.

Dans le cas où il s'agit d'un signal Vbus-fall = 1, la machine passe à l'état 104 (Vbus-reset) qui indique un flanc descendant vers un niveau bas. Si ce niveau bas est confirmé par le signal end-count = 1 du compteur 94, la machine passe à l'état 106 qui fournit le signal de sortie "reset-vbusstat" de mise à l'état "0" de la bascule 80 du registre d'états 68.

Dans le cas où il s'agit d'un signal Vbus-rise = 1, la machine passe à l'état 108 (Vbus-set) qui indique un flanc montant vers un niveau haut. Si ce niveau haut est confirmé par le signal end-count = 1 du compteur 94, la machine d'états passe à l'état 110 qui fournit le signal de sortie "set-vbusstat" de mise à l'état "1" de la bascule 80 du registre d'états 68.

Dans les deux cas traités ci-dessus, la machine d'états 92 passe de l'un des états 106 et 110 à l'état 112 qui fournit le signal set-vbusint appliqué à la bascule 76 du registre des états d'interruption 62.

Dans ces deux cas, la machine d'états revient de l'état 104 à l'état 102 si le signal Vbus-dd = 1, c'est-à-dire si un signal Vbus-rise = 1 apparaît, et de l'état 108 à l'état 102 si le signal Vbus-dd = 0, c'est-à-dire si un signal Vbus-fall = 1 apparaît.

Le circuit logique 70 réalise la fonction logique définie par la table de vérité de la figure 4 entre les deux variables binaires déterminées par les états des bascules 80 et 36, c'est-à-dire les valeurs de vbusstat et PDWN. Cette table de vérité montre que le régulateur 26 n'est en marche que si la borne V_{BUS} est alimentée par le câble de la liaison USB.

## Revendications

1. Dispositif de pilotage automatique de la tension appliquée (V_{CC}) à l'un des deux conducteurs (DP, DM) d'un câble de liaison série de type USB dans un appareil périphérique (B) connecté en amont à un autre appareil (A), ledit appareil périphérique (B) comprenant un microcontrôleur (MC) et une source de tension d'alimentation propre (26) qui fournit ladite tension appliquée (Vcc) audit conducteur de données (DP ou DM) et étant susceptible de recevoir sur un autre conducteur une tension d'alimentation (V_{BUS}), **caractérisé en ce qu**'il comprend :
- un circuit de détection (30, 60) de la présence ou de l'absence de ladite tension d'alimentation (V_{BUS}) pendant un intervalle de temps déterminé,
- un circuit de mémorisation (80) de l'état de présence ou d'absence de ladite tension d'alimentation (V_{BUS}), et
- un circuit logique de commande (70) de la source d'alimentation produisant la tension (Vcc) pour mettre en marche ladite source d'alimentation (26) uniquement en présence de ladite tension d'alimentation (V_{BUS}).

2. Dispositif selon la revendication 1, **caractérisé en ce que** le circuit de détection (30, 60) de la présence ou de l'absence de la tension d'alimentation (V_{BUS}) fournie par le câble de connexion comprend :
- un dispositif électronique (30) du type "trigger de Schmitt" dont la borne d'entrée est connectée à la borne d'alimentation du câble,
- un circuit de détection (90) du flanc montant ou du flanc descendant du signal fourni par le circuit de basculement (30) et qui fournit des signaux correspondants du flanc montant et du flanc descendant (Vbus-rise et Vbus-fall),
- un compteur (94) de la durée de maintien en l'état des signaux de flanc montant et de flanc descendant (Vbus-rise, Vbus-fall) et qui fournit un signal de fin de comptage (end-count) lorsque la durée de maintien est atteinte,
- une machine d'états (92) qui change d'état en fonction des signaux de flanc montant et de flanc descendant (Vbus-rise, Vbus-fall) et du signal de fin de comptage (end-count) et qui fournit les signaux d'état (set-Vbusstat, reset-Vbusstat) de présence et d'absence de ladite tension d'alimentation (V_{BUS}) ainsi qu'un signal (set-Vbusint) signalant le changement d'état de (V_{BUS}).

3. Dispositif selon la revendication 1 ou 2, **caractérisé en ce que** le circuit de mémorisation est une bascule (80) d'un registre d'états (68, SR) du microcontrôleur (MC) de communication.

4. Dispositif selon la revendication 1, 2 ou 3, **caractérisé en ce que** le circuit logique de commande (70) de la source d'alimentation produisant la tension (Vcc) comprend :
- un circuit inverseur (74) dont la borne d'entrée reçoit le signal d'état de présence ou d'absence de ladite tension d'alimentation (V_{BUS}), et
- un circuit OU inverseur (72) dont une des bornes d'entrée est connectée à la borne de sortie du circuit inverseur (74) et dont l'autre borne d'entrée reçoit un signal d'état (PDWN =0) indiquant que l'appareil périphérique (B) a une source d'alimentation propre.

5. Dispositif selon l'une des revendications 1 à 4, **caractérisé en ce qu**'il comprend, en outre, un circuit d'interruption du microcontrôleur (MC) comprenant :
- une bascule (76) du registre d'états d'interruption (62, ISR) du microcontrôleur (MC) dans laquelle est enregistré le changement d'état (Vbusint-ITVBUS) de la borne d'alimentation (V_{BUS}), et
- une bascule (78) du registre de masques d'interruption (64, IMR) du microcontrôleur dans laquelle est enregistré par ce dernier l'état de masquage (ITVBUSM) du changement d'état (ITVBUS), et
- un circuit ET 66 dont une des deux bornes d'entrée reçoit le signal de changement d'état (ITVBUS) et dont l'autre borne d'entrée reçoit le signal d'état de masquage (ITVBUSM),
de sorte que le microcontrôleur (MC) ne reçoit un signal de requête d'interruption (IR) que s'il y a eu un changement d'état (ITVBUS = 1) et que le signal d'état de la bascule de masquage a la valeur "1" (ITVBUSM = 1).

6. Appareil périphérique (B) connecté à un appareil (A) en amont par un câble de liaison série de type USB, **caractérisé en ce qu**'il comprend un dispositif de pilotage selon l'une des revendications 1 à 5.

## Claims

1. Device for automatically controlling a voltage (V_{cc}) applied to one of two data conductors (DP, DM) of a USB type serial link cable in a peripheral apparatus (B) connected upstream to another apparatus (A), said peripheral apparatus (B) comprising a microcontroller (MC) and an own supply voltage source (26) which supplies said applied voltage (V_{CC}) to said data conductor (DP or DM) and being susceptible of receiving on another conductor a supply voltage (V_{BUS}), **characterized in that** it comprises:
- a detection circuit (30, 60) for detecting a presence or an absence of said supply voltage (V_{BUS}) during a determined time interval,
- a memory circuit (80) for memorizing a state of presence or absence of said supply voltage (V_{BUS}), and
- a logic control circuit (70) for controlling the supply source producing the voltage (V_{CC}) to set into operation said supply source (26) only in the presence of said supply voltage (V_{BUS}).

2. Device according to claim 1, **characterized in that** the detection circuit (30, 60) for detecting a presence or absence of the supply voltage (V_{BUS}) supplied by the link cable comprises:
- an electronic device (30) of the Schmitt trigger type, of which an input terminal is connected to the supply terminal of the cable,
- a detection circuit (90) for detecting a rising edge or a falling edge of the signal supplied by the detection circuit (30) and which supplies corresponding signals of the rising edge and of the falling edge (Vbus-rise and Vbus-fall),
- a counter (94) of the duration over which the rising edge and falling edge signals (Vbus-rise and Vbus-fall) are maintained in their state, and which produces an end of count signal (end-count) when the duration of maintaining in the state is attained,
- a state machine (92) which changes state as a function of the rising edge and falling edge signals (Vbus-rise and Vbus-fall) and of the end of count signal (end-count), and which produces the signals of the state (set-Vbusstat, reset-Vbusstat) of presence and absence of said supply voltage (V_{BUS}) as well as a signal (set-Vbusint) signaling the change of state of signal Vbus.

3. Device according to claim 1 or 2, **characterized in that** the memory circuit is a latch (80) of a state register (68, SR) of the communications microcontroller (MC).

4. Device according to any one of claims 1 to 3, **characterized in that** the logic control circuit (70) for controlling the supply source producing the voltage (V_{CC}) comprises:
- an inverter circuit (74) whose input terminal receives the signal of the state of presence or absence of said supply voltage (V_{BUS}), and
- an inverting OR circuit (72) of which one input terminal is connected to the output terminal of the inverter circuit (74) and of which the other input terminal receives a state signal (PDWN = 0) indicating that the peripheral apparatus (B) has its own supply source.

5. Device according to any one of claims 1 to 4, **characterized in that** it further comprises a circuit for interrupting the microcontroller (MC), comprising:
- a latch (76) of the interrupt state register (62, ISR) of the microcontroller (MC) in which is recorded the change of state (Vbusint-ITVBUS) of the supply terminal (V_{BUS}), and
- a latch (78) of the interrupt mask register (64, IMR) of the microcontroller (MC) in which is recorded, by the latter, the state of masking (ITVBUSM) of change of state (ITVBUS), and
- an AND circuit 66 of which one of the two input terminals receives the signal of change of state (ITVBUS) and of which the other input terminal receives the state of masking signal (ITVBUSM), such that the microcontroller (MC) receives an interrupt request signal (IR) only if there occurred a change of state (ITVBUS = 1) and if the state signal of the masking latch has a logic value "1" (ITVBUSM=1).

6. Peripheral apparatus (B) connected to an upstream apparatus (A) by a USB type serial link cable, **characterized in that** it comprises a control device according to any one of claims 1 to 5.

## Patentansprüche

1. Vorrichtung zur automatischen Steuerung der Spannung (Vcc), die an den einen der beiden Leiter (DP, DM) einer Serienkabelverbindung der Art USB in einem Anschlussgerät (B) angelegt wird, dem ein anderes Gerät (A) vorgeschaltet ist, wobei das Anschlussgerät (B) einen Mikrosteuerschalter (MC) und eine eigene Versorgungsspannungsquelle (26) aufweist, welche die an den Datenleiter (DP, DM) angelegte Spannung (Vcc) liefert, und es auf einem anderen Leiter eine Versorgungsspannung (V_{BUS}) empfangen kann, **dadurch gekennzeichnet, dass** sie aufweist:
- eine Schaltung zur Erfassung (30, 60) des Vorhandenseins oder des Fehlens der Versorgungsspannung (V_{BUS}) während eines bestimmten Zeitintervalls,
- eine Schaltung zur Speicherung (80) des Zustands des Vorhandenseins oder des Fehlens der Versorgungsspannung (V_{BUS}) und
eine logische Schaltung zur Steuerung (70) der Versorgungsquelle, welche die Spannung (Vcc) erzeugt, um die Versorgungsquelle (26) nur bei Vorhandensein der Versorgungsspannung (V_{BUS}) in Gang zu setzen.

2. Vorrichtung gemäß Anspruch 1, **dadurch gekennzeichnet, dass** die Schaltung zur Erfassung (30, 60) des Vorhandenseins oder des Fehlens der von dem Verbindungskabel gelieferten Versorgungsspannung (V_{BUS}) aufweist:
- eine elektronische Vorrichtung (30) der Art "Schmitt-Trigger", deren Eingangsklemme an die Versorgungsklemme des Kabels angeschlossen ist,
- eine Schaltung zur Erfassung (90) der steigenden Flanke oder der fallenden Flanke des von der Kippschaltung (30) gelieferten Signals, welche entsprechende Signale für die steigende Flanke und die fallende Flanke (Vbus-rise und Vbus-fall) liefert,
- eine Zählvorrichtung (94) für die Dauer des Haltens im Zustand der Signale mit steigender Flanke und fallender Flanke (Vbus-rise, Vbus-fall), welche ein Zählendsignal (end-count) liefert, wenn die Haltedauer erreicht ist,
- eine Zustandsmaschine (92), welche den Zustand in Abhängigkeit von den Signalen mit steigender Flanke und mit fallender Flanke (Vbus-rise, Vbus-fall) und dem Zählendsignal (end-count) ändert, und welche Zustandssignale (set-Vbusstat, reset-Vbusstat) des Vorhandenseins und Fehlens der Versorgungsspannung (V_{BUS}) sowie ein Signal (set-Vbusint) liefert, welches die Zustandsänderung von (V_{BUS}) signalisiert.

3. Vorrichtung gemäß Anspruch 1 oder 2, **dadurch gekennzeichnet, dass** die Speicherschaltung eine Kippschaltung (80) eines Zustandsregisters (68, SR) des Kommunikations-Mikrosteuerschalters (MC) ist.

4. Vorrichtung gemäß Anspruch 1, 2 oder 3, **dadurch gekennzeichnet, dass** die logische Steuerschaltung (70) für die Versorgungsquelle, welche die Spannung (Vcc) erzeugt, aufweist:
- eine Umkehrschaltung (74), deren Eingangsklemme das Zustandssignal über das Vorhandensein oder Fehlen der Versorgungsspannung (V_{BUS}) empfängt; und
- eine ODER-Umkehrschaltung (72), deren eine Eingangsklemme an die Ausgangsklemme der Umkehrschaltung (74) angeschlossen ist, und deren andere Eingangsklemme ein Zustandssignal (PDWN = 0) empfängt, welches anzeigt, dass das Anschlussgerät (B) eine eigene Versorgungsquelle aufweist.

5. Vorrichtung gemäß einem der Ansprüche 1 bis 4, **dadurch gekennzeichnet, dass** sie außerdem eine Unterbrechungsschaltung für den Mikrosteuerschalter (MC) aufweist, mit:
- einer Kippschaltung (76) für das Unterbrechungszustandsregister (62, ISR) des Mikrosteuerschalters (MC), in welcher die Zustandsveränderung (Vbusint-ITVBUS) der Versorgungsklemme (V_{BUS}) registriert ist, und
- einer Kippschaltung (78) für das Unterbrechungsmaskenregister (64, IMR) des Mikrosteuerschalters, in welcher durch diesen letzteren der Maskierungszustand (ITVBUSM) der Zustandsänderung (ITVBUS) registriert ist, und
- einer UND-Schaltung (66), deren eine der beiden Eingangsklemmen das Zustandsänderungssignal (ITVBUS) empfängt, und deren andere Eingangsklemme das Maskierungszustandssignal (ITVBUSM) empfängt, so dass der Mikrosteuerschalter (MC) nur dann ein Unterbrechungsanforderungssignal (IR) empfängt, wenn es eine Zustandsänderung (ITVBUS = 1) gegeben hat und wenn das Zustandssignal der Maskierungskippschaltung den Wert "1" (ITVBUSM = 1) hat.

6. Anschlussgerät (B), das durch ein Serienverbindungskabel der Art USB an ein vorgeschaltetes Gerät (A) angeschlossen ist, **dadurch gekennzeichnet**, das es eine Steuervorrichtung gemäß einem der Ansprüche 1 bis 5 aufweist.
